# EUROPEAN PATENT APPLICATION

(11) **EP 2 493 171 A1**
(43) Date of publication of application: **29.08.2012**
(21) Application number: 11156002.5
(22) Date of filing: 25.02.2011
(51) Int. Cl.: H04N 5/00, H04N 17/00, H04N 7/26

(54) **Video data stream evaluation systems and methods**

(71) Applicant: Tektronix International Sales GmbH, 8212 Neuhausen am Rheinfall (CH)
(72) Inventor: Post, William Lewis, MCMinnville, OR 97128 (US); Morgan, Richard G, Cambridge, Cambridgeshire CB5 8UJ (GB); Robinson, Paul, Weston Huntingdon, Cambridgeshire PE 28 (GB); Ferguson, Kevin M., Beaverton, OR 97008 (US); Howard, Colin, Huntingdon, Cambridgeshire PE29 1EP (GB); Tusing, George W., Portland, OR 97225 (US); Caceres, Antoni, Cambridge, Cambridgeshire CB1 3UR (GB)
(74) Representative: Schurack, Eduard F.

(57) **Abstract**

A machine-controlled method of evaluating a video data stream having multiple broadcast channels can include selecting at least two video frames for a particular channel, extracting the selected video frames from the video data stream, decoding the extracted video frames, comparing at least one of the decoded video frames to the other decoded video frame(s) or a previously stored video frame, and preparing an evaluation of the video data stream based on the comparing.

## Description

### TECHNICAL FIELD

The disclosed technology pertains to the transmission of video data streams, and more particularly to monitoring and evaluating video data streams that include multiple broadcast channels.

### BACKGROUND

The transport of both video and audio data has been steadily transitioning away from legacy technologies. For example, many television broadcasting facilities now prefer to transmit the broadcast data using Internet protocol (IP) transport over Ethernet connections rather than more traditional transport modalities, such as serial digital interface (SDI) and asynchronous serial interface (ASI) over coaxial cable connections. Video compression techniques are usually implemented in connection with broadcast transmissions to reduce the bandwidth required to transmit video via terrestrial broadcast, cable television, or satellite television.

Compressed video carried over Ethernet/IP protocols is commonly referred to as "IP video" and includes Ethernet/IP transport inside professional facilities as well as transport to individual residences. IP video can effectively carry hundreds of channels of video and audio in a multiplexed form. The channels can be a mix of standard definition (SD) and high definition (HD) content with different formats being sent in parallel for SD channels and HD channels. A typical IP video stream is carried on either a ten gigabit per second (Gbps) connection, e.g., an arterial connection to a regional sub-station, or a one Gbps Ethernet physical link, e.g., from the regional sub-station to an individual residence.

A significant problem facing the video broadcast industry is the inability to efficiently and effectively monitor the transmission quality of the hundreds of channels of video and audio that are typically broadcast by a single broadcast provider. Video broadcast providers are frequently unaware of transmission problems that impact customers' viewing experience until it is too late. While customers are generally willing to deal with occasional momentary "glitches," many customers will not tolerate frequent and/or prolonged issues with video transmission, such as black video, frozen video, or blocky video presentations.

Customers that get frustrated with video transmission problems such as black, frozen, or blocky video presentations, can easily become ex-customers by simply switching to another video provider. Also, even if a customer does not end up switching to another provider, customer-initiated service calls can be very costly in terms of both customer support and technical support resources. Customer calls that result in a need to send a field technician to the customer's premises can be particularly costly for the provider.

The ability to perform baseband measurements on hundreds of multiplexed video and audio channels is thus a key problem in the emerging IP video monitoring area. Current systems typically monitor transport layers for error information with no significant baseband checking. For example, legacy products may monitor transport layers in detail but they can do little, if any, monitoring of decoded baseband video. These systems are particularly insufficient for IP video because there can be, and frequently are, transmission issues across both transport layers and decompressed baseband data. While more recent products may attempt to perform measurements of decoded baseband video, they cannot handle the monitoring of more than a few channels of decompressed baseband data, let alone hundreds of multiplexed channels in parallel.

### SUMMARY

Embodiments of the disclosed technology can include monitoring of several decoded baseband measurements for hundreds of channels of Internet protocol (IP) video and in particular the full line rate of a one Gbps Ethernet link in near-real-time. Certain implementations can support both fast monitoring and deep monitoring of up to hundreds of channels of IP video carried by a high-speed IP video data stream, thereby giving broadcast video providers the ability to obtain timely and valuable quality of experience (QoE) measurements and alerts with respect to the video quality delivered to their customers.

### BRIEF DESCRIPTION OF THE DRAWINGS

Figure 1 is a block diagram that illustrates an example of an elementary stream having different kinds of video frames.

Figure 2 is a block diagram that illustrates an example of repurposing video from a first resolution to a second, smaller resolution.

Figure 3 is a block diagram that illustrates an example of a video data stream evaluation system in accordance with embodiments of the disclosed technology.

Figure 4 is a block diagram that illustrates an example of a video frame preliminary processing module in accordance with embodiments of the disclosed technology.

Figure 5 is a block diagram that illustrates an example of a video data stream evaluation system for multiple channel types in accordance with embodiments of the disclosed technology.

Figure 6 is a block diagram that illustrates an example of a video data stream evaluation system having fast scan and deep scan video evaluation modules in accordance with embodiments of the disclosed technology.

Figure 7 is a flowchart that illustrates an example of a machine-controlled method of evaluating a video data stream in accordance with embodiments of the disclosed technology.

Figure 8 is a flowchart that illustrates another example of a machine-controlled method of evaluating a video data stream in accordance with embodiments of the disclosed technology.

### DETAILED DESCRIPTION

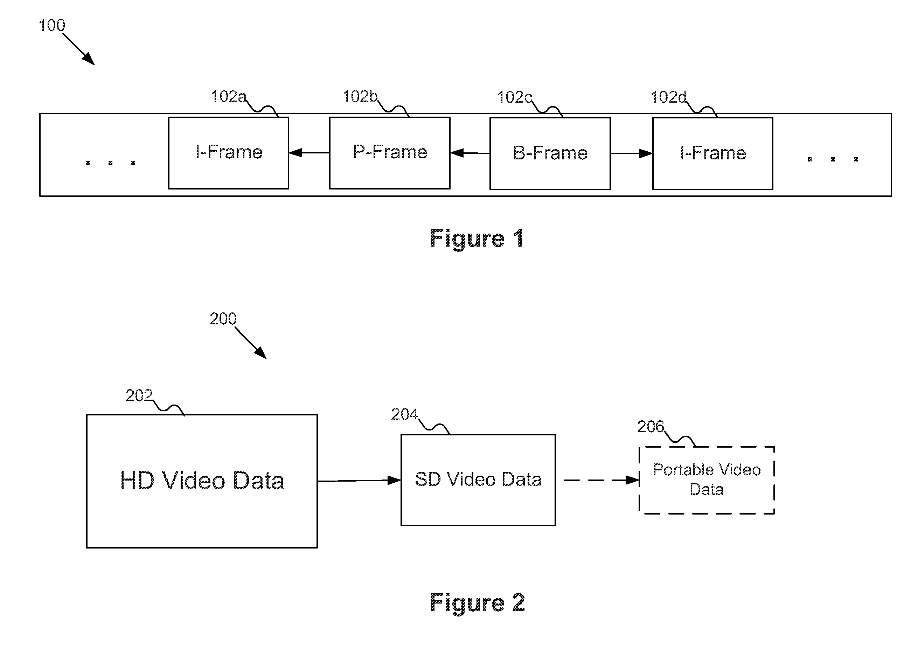

Figure 1 is a block diagram that illustrates an elementary video data stream (ES stream) 100. In the example, the ES stream 100 has four individual frames: two independent frames (I-frames) 102a and 102d, a predictive frame (P-frame) 102b, and a bi-directional frame (B-frame) 102c. The I frames 102a and 102d are each essentially a fully-specified picture, similar to a static image. The P frame 102b and B frame 102c each hold only a portion of the corresponding image information, thus requiring less storage space than the I frames 102a and 102d.

The P-frame 102b stores only changes between the current frame and the previous frame, i.e., the first I-frame 102a, which is why P-frames are generally referred to as "delta frames." For example, if the only change in the image between the I-frame 102a and the P-frame 102b is a character walking in the foreground of the image, then the unchanging background pixels of the image are not stored in the P-frame 102b. The B frame 102c saves even more storage space by using the differences between the current frame and both the preceding frame, i.e., the P-frame 102b, and the following frame, i.e., the second I-frame 102c, to specify the content to be displayed.

A packetized elementary stream (PES) typically includes multiple PES packets that are each formed from video data within an ES, such as the ES 100 of Figure 1. PES packets are usually broken into fixed size transport stream (TS) packets. A transport stream generally includes multiple 188-byte TS packets, which can be readily multiplexed together and transmitted as part of an IP video stream using typical broadcast transmission techniques.

Figure 2 is a block diagram illustrating the data reduction 200 of high definition (HD) video data 202 to standard definition (SD) video data 204. For example, the HD video data 202 may have a resolution of 1080i that needs to be repurposed, i.e., reduced to a resolution of 640x480 for the SD video data 204. In certain situations, the SD video data 204 may need to be reduced to portable video data 206 so that it can be displayed on a mobile device such as a handheld computer or mobile phone, for example. A common problem with repurposing is that each data reduction brings the possible introduction of defects into the video data. For example, reducing an image from one resolution to a second, smaller resolution can make the picture softer and fuzzier on the device displaying the image with the reduced resolution.

Each layer of a given video data stream should be monitored for errors because each layer has its own set of possible errors. Also, a problem in one layer, e.g., an IP packet, often results in errors in other layers, e.g., a corresponding TS packet. In fact, a single corrupted video frame can cause an error that propagates across many video frames. If a splicer picks the wrong splice point, for example, it need only be off by a single bit to corrupt the data stream. While some current systems have certain built-in error correction capabilities, they are very limited. For example, some current systems can support a limited evaluation of a given transport stream or a packetized elementary stream analysis.

To complicate matters, newer standards such as H.264 tend to require so much processing power that evaluation of a single channel, let alone hundreds of channels, can effectively cripple a processor. In fact, a high-performance PC can handle no more than a few H.264 video streams because of the complexity. Hardware decoders can typically handle no more than four H.264 video streams and, even then, only by switching among them over time. This is because there are too many processing resources needed to decode all of the data, even with very capable hardware.

It is preferable to perform critical decoded baseband measurements in near-real-time, such as black frame, frozen frame, and blockiness detection. "Black frame" generally refers to situations in which the displayed video is "stuck" at substantially or completely black. "Frozen frame" generally refers to situations in which the displayed video is "stuck" on a single frame which essentially repeats itself. "Blockiness" generally refers to the presence of visible artifacts having edges that are blocks or rectangular in shape. One having ordinary skill in the art will appreciate that displayed video presenting of these behaviors may include noise. For example, a "black" frame may actually have some noise on it and, even though a viewer may say that the displayed video is stuck at black, the data may not actually be perfectly uniform.

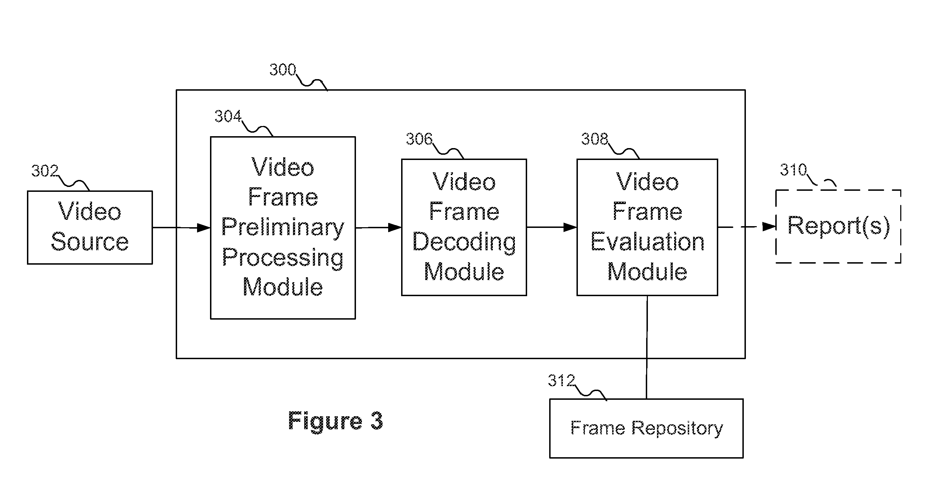

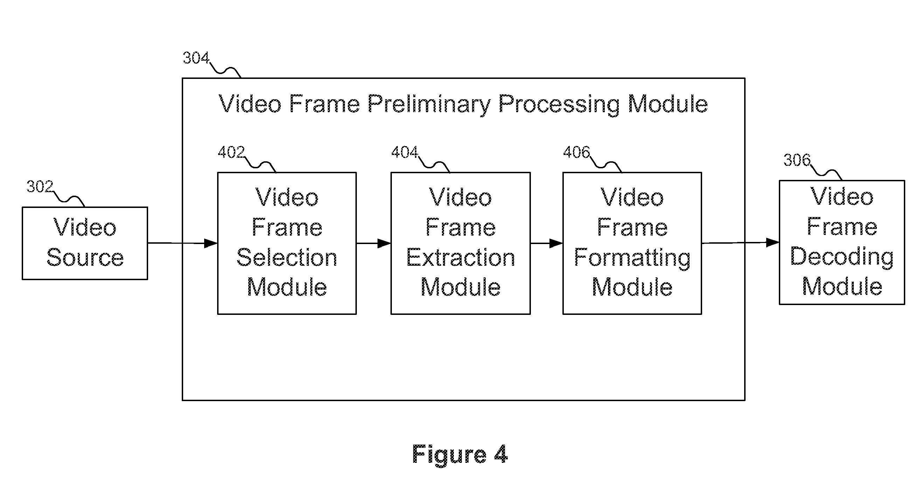

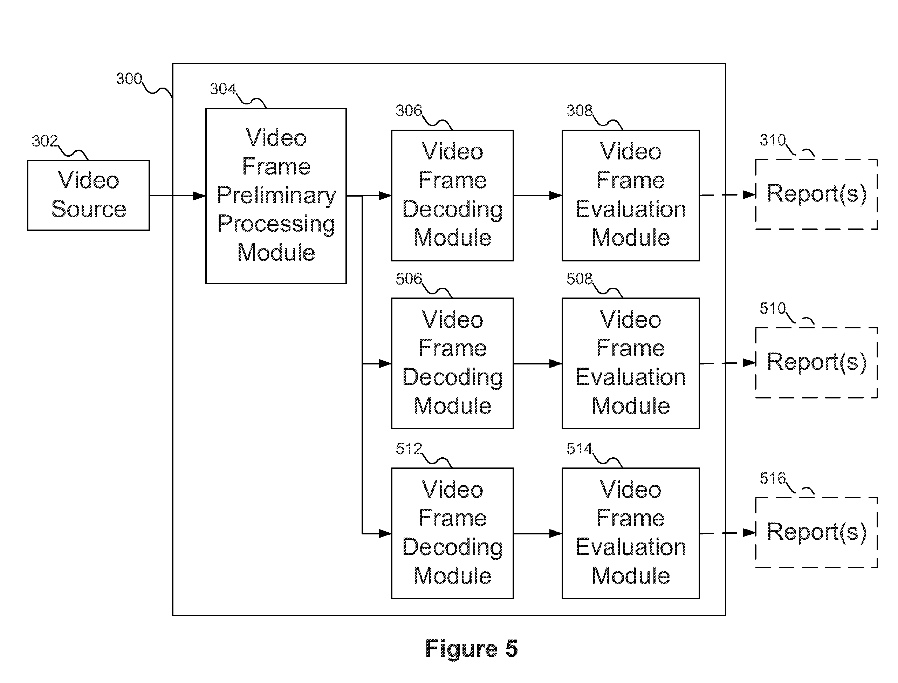

Figure 3 is a block diagram that illustrates an example of a video data stream evaluation system 300. A video source 302 provides a video data stream to the video data stream evaluation system 300. The video data stream can include a number of individually broadcast channels. In the example, the video data stream evaluation system 300 includes a video frame preliminary processing module 304 that can receive the video data stream from the video source 302 and perform preliminary processing on the video data stream such as formatting the video frames, as discussed below with respect to the example illustrated in Figure 4, for example. In certain embodiments, the video frame preliminary processing module 304 can group the video data by video data type, e.g., HD data and SD data, as discussed in greater detail with respect to the example illustrated in Figure 5.

Once a properly formatted set of video data from one or more channels is ready and has been optionally assembled with data from other channels of the same variant, the video frame preliminary processing module 304 can place video data at the front of a decoder queue, for example, which can subsequently send the video data to decoder resources, e.g., a video frame decoding module 306. The video frame decoding module 306 can decode the video frames received from the video frame preliminary processing module 304 and pass the decoded video frames to a video frame evaluation module 308.

If an expected number of properly decoded video frames do not emerge from the video frame decoding module 306, an error can be sent to a control block to determine what to do as a response, for example. While such situations can result from actual errors in the video data that need to be evaluated in greater detail by other processes, such situations can also be triggered by a decoder-related issue, e.g., the video frame decoding module 306 not getting enough pre-set time or setup data. In such scenarios, the video frame decoding module 306 can provoke a retry, request the sending of more video data during the next cycle, or alerting a particular user.

Upon receiving the decoded video frames from the video frame decoding module 306, the video frame evaluation module 308 can perform a channel-specific evaluation based on the decoded video frames received from the video frame decoding module 306. For example, the video frame evaluation module 308 can determine whether the video is currently exhibiting certain undesirable characteristics such as black, frozen, or blocky presentations.

In certain implementations, the video frame evaluation module 308 can evaluate, e.g., compare the decoded video frames by measuring them singly and in comparison with each other using any of a number of commonly used video frame comparison algorithms. The video frame evaluation module 308 can optionally save copies of at least one previous cycle's video frames for each channel for possible use in future evaluations, e.g., comparisons.

Certain implementations include a provocation of time separation between video frames from the same channel to advantageously reduce the false positive rate for frozen frames, for example. If the video frames are nearly identical at a spacing of several seconds, it is much more likely the video is actually frozen than if adjacent frames are substantially similar except for "noise." This is because adjacent frames usually have a high correlation. Therefore, the effective detection of black or frozen images generally requires that the video frame evaluation module 308 compare at least two frames. Also, because equipment errors can be missed by just looking at I-frames or IDR frames, the video frame evaluation module 308 generally considers P-frames and/or B-frames in addition to I-frames.

In certain embodiments, the video frame evaluation module 308 can generate one or more reports 312 that can be sent continuously, at specific times, or in response to certain conditions being met. For example, the video frame evaluation module 308 can be set to only send reports 312 when the video is exhibiting certain specified characteristics. The reports 312 can include alerts or trigger alerts (not shown). For example, if a certain channel is currently frozen, the video frame evaluation module 308 can issue a report 312 containing or as an alert to a local technical support team that can start troubleshooting the problem right away. The report(s) 312 can include various types of information, such as what channel is affected, what behavior is currently being exhibited by the channel, and how long the channel has been exhibiting the behavior.

As part of the evaluation of the decoded video frames, the video frame evaluation module 308 can retrieve previously stored video frames from a frame repository 310 such as an internal and/or remote database. For example, the video frame evaluation module 308 can compare the current video frames to any of a number of previous video frames, such as the most recent previous video frame. The video frame evaluation module 308 can also store the currently evaluated video frames at the frame repository 310 so that they can be used by the video frame evaluation module 308 for subsequent evaluations.

Certain embodiments of the disclosed technology can provide cost-effective near-real-time measurements on hundreds of channels of video in an IP video stream. For example, consider an IP video stream having 500 channels. An implementation including two 60 frame-per-second hardware decoders can perform a complete cycle through all 500 channels in 12 seconds, assuming an average of three frame-times per channel being decoded.

One having ordinary skill in the art will appreciate that the video data stream evaluation system 300 can be implemented in a number of different ways. For example, the individual components of the video data stream evaluation system 300 can be implemented as hardware components, software components, or a combination thereof. In implementations involving hardware components, the components can be separate from each other, implemented as part of a single hardware component, or a combination thereof.

One having ordinary skill in the art will appreciate that implementations of the disclosed technology can include an audio data stream evaluation system in addition to, or in place of, a video data stream evaluation system. In certain embodiments, a single data stream evaluation system, such as the video data stream evaluation system 300 of Figure 3, can be structured to handle both audio data and video data for each of a number of corresponding broadcast channels.

Figure 4 is a block diagram that illustrates a detailed example of the video frame preliminary processing module 304 of Figure 3. In the example, the video frame preliminary processing module 304 includes a video frame selection module 402 that selects at least two video frames for a particular channel from the video data stream received from the video source 302. Use of the video frame selection module 402 can drastically reduce the data by reading through the incoming video stream and selecting only two video frames for each channel to ultimately be sent to decoding resources. Finding video objects in a video stream requires significantly less processing resources than doing a full decoding.

The video frame selection module 402 can select two I-frames for a given channel. Alternatively, the video frame selection module 402 can select one I-frame and either a P-frame or a B-frame. In yet other embodiments, the video frame selection module 402 can select virtually any combination of I-frames, P-frames, and B-frames. In certain embodiments, the video frame selection module 402 can select more than two video frames within a given video stream.

Once the video frames have been selected, the video frame selection module 402 can send an identification of the selected video frames to a video frame extraction module 404, which extracts the selected video frames from the video data stream. One having ordinary skill in the art will appreciate that the video frame selection module 402 and the video frame extraction module 404 can be implemented together or even as a single component. Once the video frame extraction module 404 has extracted the selected video frames, it then sends the extracted video frames to a video frame formatting module 406.

The video frame formatting module 406 can format the extracted video frames received from the video frame extraction module 404. For example, once the location of the selected frames has been identified, the video frame formatting module 406 can queue up the data and place it in the right format for use by the video frame decoding module 306. In certain embodiments, the video frame formatting module 406 can create one or more synthetic data streams that each essentially copies the corresponding video data into a proper format for decoding by the video frame decoding module 306. The video frame formatting module 406 can take into account various MPEG formatting details such as decode timestamps, presentation timestamps, and metadata, which can be modified as needed to ensure that the video frame decoding module 306 will work properly.

Figure 5 is a block diagram that illustrates an example of the video data stream evaluation system 300 of Figure 3 modified to handle multiple channel types. In the example, the video frame preliminary processing module 304 can reduce decoder reset and set-up time by batching video frames of the same type together before sending through the decoding process. In certain embodiments, the video frame preliminary processing module 304 can create a synthetic stream for each video type. As used herein, a synthetic stream generally refers to a newly constructed data stream that includes certain video data copied from the corresponding actual video stream, e.g., all video data of a certain type.

The re-formatting of a relatively small set of extracted video frames into a format that is expected by the receiving decoder can enable the system to avoid a need to reset the decoder and, as a result, avoid the processing time loss that is generally associated therewith. Because there are usually only a small number of different video frame types, e.g., five types, the use of a few synthetic channels can result in very efficient processing performance by the decoding resources, even in situations that involve a video pipeline having several hundred channels.

In situations where the video frames include a mix of SD video channels and HD video channels, for example, the video frame preliminary processing module 304 can batch the SD channels together into a first synthetic stream and send the first synthetic stream to the video frame decoding module 306. The video frame preliminary processing module 304 can also batch the HD channels together into a second synthetic stream and send the second synthetic stream to another video frame decoding module 506, which decodes the stream and then passes the decoded frames on to another video frame evaluation module 508 that can optionally generate reports 510 regarding the HD data.

In situations where there are variants of HD channels, the video frame preliminary processing module 304 can batch each variant together. For example, the video frame preliminary processing module 304 of Figure 5 can batch one variant together and send it as a single stream to yet another video frame decoding module 512, which decodes the video frames and sends them to a third video frame evaluation module 514 that can optionally generate reports 516 regarding the variant.

The video data stream evaluation system 300 of Figure 5 shows three separate sets of video frame decoding modules 306, 506, and 512, and video frame evaluation modules 508 and 514, respectively. However, one skill in the art will appreciate that alternative embodiments can include a single video frame decoding module and/or a single video frame evaluation module to handle multiple groups of streams rather than separate decoding resources and evaluation components.

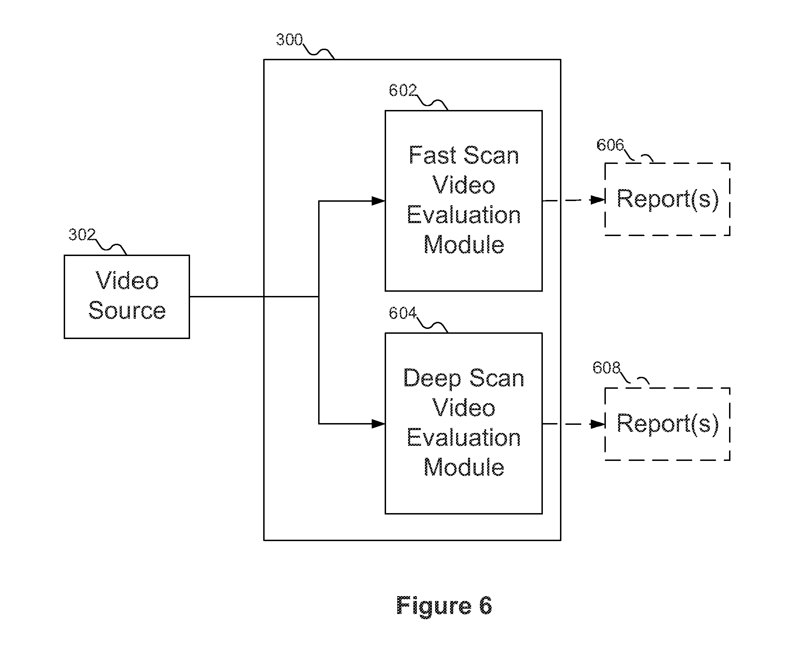

Figure 6 is a block diagram that illustrates an example of the video data stream evaluation system 300 of Figure 3 that has a fast scan video evaluation module 602 and a deep scan video evaluation module 604. In the example, the fast scan video evaluation module 602 can perform a fast scan for certain errors such as black, frozen, or blocky video presentations. As used herein, a fast scan refers to a continuous scan of a number of different channels in which the fast scan video evaluation module 602 selects, extracts, and evaluates a minimal number of frames for a channel, e.g., two frames, before advancing to the next channel to be evaluated.

The fast scan video evaluation module 602 can perform a fast scan across all channels that is of limited depth and with a constrained amount of data examined per channel. The fast scan video evaluation module 602 can thus perform a limited set of baseband measurements on a particular channel, report results regarding the channel, and then proceed to the next channel in a fast, typically near-real-time cycle. If the fast scan video evaluation module 602 detects a potential trigger, e.g., possible black or frozen video, the video data stream evaluation system 300 can invoke the deep scan video evaluation module 604 to take a longer look at the channel to confirm whether the suspected condition indeed exists.

As used herein, a deep scan or deep dive generally refers to a longer, more detailed video analysis of a certain channel. A deep scan can effectively take fast scan suspicions and convert them into high confidence results. For example, if a particular channel seems to be exhibiting a frozen presentation based on a fast scan by the fast scan video evaluation module 602, the deep scan video evaluation module 604 can monitor the channel in detail for several seconds to gain a high confidence that the channel is indeed frozen. Another situation that may trigger a deep scan is where the group of pictures (GOP) structure changes for a particular channel. In such a situation, the deep scan video evaluation module 604 can give extra attention to that channel to see if there are baseband video problems due to the GOP change.

In certain embodiments, a list of channels to be evaluated can drive the deep scan video evaluation module 604. The list can indicate a prioritization for the channels. For example, the list can give higher priority to deep analysis of channels identified by the fast scan process or identified by a user request, e.g., from an external automated video management system. The list can direct the deep scan video evaluation module 604 to perform a deep scan on a particular channel or to more frequently perform deep scans on priority channels such as pay-per-view channels, for example. The deep scan video evaluation module 604 can also be set to continuously cycle through deep scans on all channels when inactive, e.g., not actively processing a deep scan triggered by the list.

In certain embodiments, smart alarm processing and engine control can be used to set up a list of which channels to monitor. The smart alarm processing and engine control can also designate a number of video characteristics that the system should be specifically aware of and track. In certain embodiments, the smart alarm processing and engine control can receive analysis results, e.g., the reports 310 of Figure 3, and determine how to handle the information. Based on the information, the smart alarm processing and engine control can decide whether to create and send alarms, e.g., to a particular user and/or network management system.

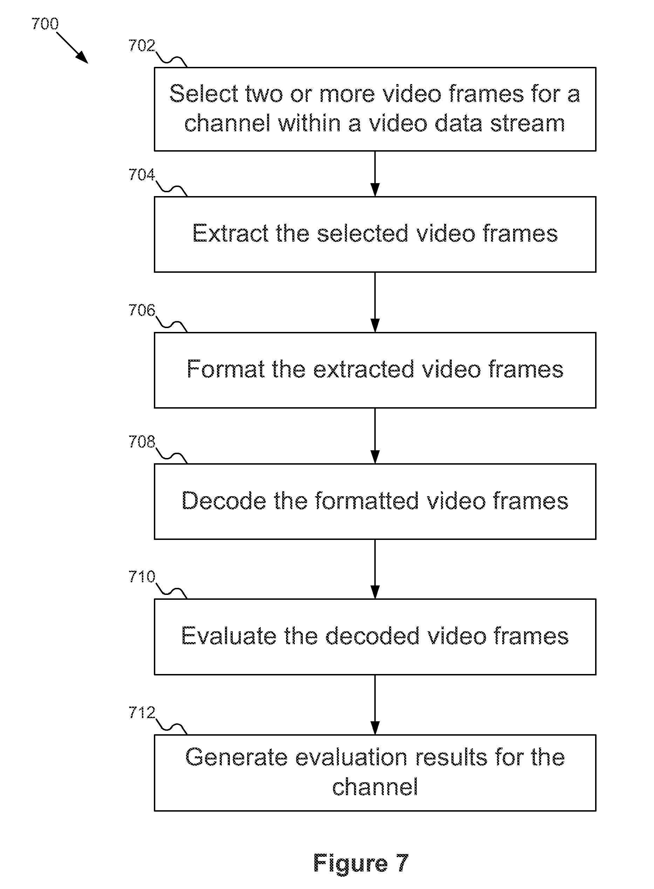

Figure 7 is a flowchart that illustrates an example of a machine-controlled method 700 of evaluating a video data stream. At 702, two or more video frames are selected for a particular channel within an incoming video data stream. In certain embodiments, the system can start at the beginning of an I-frame or an IDR-frame. Once the two or more frames have been selected for the channel, they can then be extracted from the video data stream, as shown at 704. In certain embodiments, extracting refers to copying the video data corresponding to the selected video frames into a newly created synthetic stream.

At 706, the extracted video frames are formatted before being sent to decoding resources. The formatted video frames are then decoded, as shown at 708. In certain embodiments where the decoding resources have already decoded some video frames, the decoding process can begin by resetting the decoder and preparing it to receive the next set of data. Once the decoder is prepared, the video data can be sent through the decoder and the output can be captured. The resulting frames can then be tagged with channel information, timing information, and other metadata such as decoder flags, for example, before being sent to evaluation resources.

At 710, the formatted video frames received from the decoder are evaluated. For example, the video frames can be measured against each other and/or against previously stored video frames to determine whether the video frames being evaluated exhibit certain undesirable characteristics such as black video, frozen video, or blocky video presentation, for example. Results of the evaluation can be generated, as shown at 712, and optionally sent to one or more recipients for potential action based on the results. For example, broadcast video providers can advise technical support personnel to proactively address black or frozen video detected for a particular channel before receiving phone calls from angry customers.

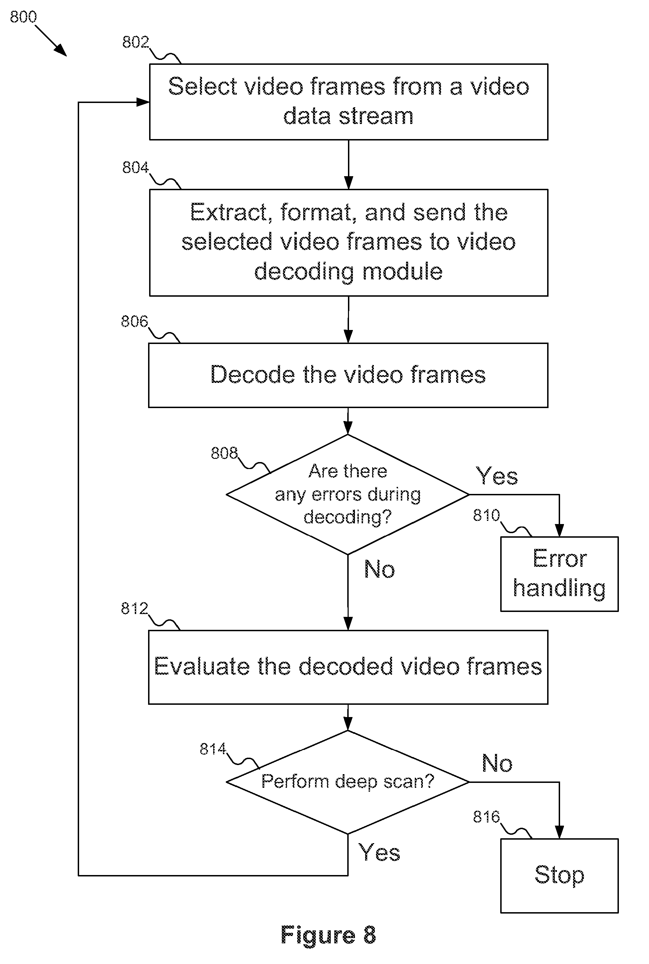

Figure 8 is a flowchart that illustrates another example of a machine-controlled method 800 of evaluating a video data stream. At 802, two or more video frames are selected from a video data stream for a particular channel. At 804, the selected video frames are extracted, formatted, and send to decoding resources, which decode the video frames as shown at 806.

At 808, a determination can be made as to whether any errors occurred during the decoding at 806. If an error is detected, error handling can be invoked as shown at 810. For example, an error message can be sent to a designated recipient. If no error is detected, or if a certain error is detected but deemed to be harmless or irrelevant to the current processing, the video frames are then evaluated as shown at 812. For example, the system can determine whether the video as currently delivered for the channel is black, frozen, or blocky. The evaluating at 812 can include a fast scan of the channel.

At 814, a determination can be made as to whether a deep scan should be performed for the channel being evaluated. For example, if the fast scan of the channel resulted in the detection of possible black or frozen video presentation for the channel, the system can provoke a deep scan of the channel to confirm whether the channel is indeed exhibiting the specified characteristic. If a deep scan is to occur, processing returns to 802. If the possibility of black or frozen video is identified, for example, the system can gain a high confidence measure by looking at more video frames for the channel and over a greater period of time. If no deep scan is to occur, processing of the current channel can stop, as shown at 816. At this point, the method 800 can begin with respect to the next channel to be evaluated.

While the illustrated embodiments of the disclosed technology generally focus on IP video, one having ordinary skill in the art will appreciate that implementations can also be applicable to satellite, cable, or terrestrial transport mediums.

### General description of a suitable machine in which embodiments of the disclosed technology can be implemented

The following discussion is intended to provide a brief, general description of a suitable machine in which embodiments of the disclosed technology can be implemented. As used herein, the term "machine" is intended to broadly encompass a single machine or a system of communicatively coupled machines or devices operating together. Exemplary machines can include computing devices such as personal computers, workstations, servers, portable computers, handheld devices, tablet devices, and the like.

Typically, a machine includes a system bus to which processors, memory (e.g., random access memory (RAM), read-only memory (ROM), and other state-preserving medium), storage devices, a video interface, and input/output interface ports can be attached. The machine can also include embedded controllers such as programmable or non-programmable logic devices or arrays, Application Specific Integrated Circuits, embedded computers, smart cards, and the like. The machine can be controlled, at least in part, by input from conventional input devices (e.g., keyboards and mice), as well as by directives received from another machine, interaction with a virtual reality (VR) environment, biometric feedback, or other input signal.

The machine can utilize one or more connections to one or more remote machines, such as through a network interface, modem, or other communicative coupling. Machines can be interconnected by way of a physical and/or logical network, such as an intranet, the Internet, local area networks, wide area networks, etc. One having ordinary skill in the art will appreciate that network communication can utilize various wired and/or wireless short range or long range carriers and protocols, including radio frequency (RF), satellite, microwave, Institute of Electrical and Electronics Engineers (IEEE) 545.11, Bluetooth, optical, infrared, cable, laser, etc.

Embodiments of the disclosed technology can be described by reference to or in conjunction with associated data including functions, procedures, data structures, application programs, instructions, etc. that, when accessed by a machine, can result in the machine performing tasks or defining abstract data types or low-level hardware contexts. Associated data can be stored in, for example, volatile and/or non-volatile memory (e.g., RAM and ROM) or in other storage devices and their associated storage media, which can include hard-drives, floppy-disks, optical storage, tapes, flash memory, memory sticks, digital video disks, biological storage, and other tangible, physical storage media.

Associated data can be delivered over transmission environments, including the physical and/or logical network, in the form of packets, serial data, parallel data, propagated signals, etc., and can be used in a compressed or encrypted format. Associated data can be used in a distributed environment, and stored locally and/or remotely for machine access.

Having described and illustrated the principles of the invention with reference to illustrated embodiments, it will be recognized that the illustrated embodiments may be modified in arrangement and detail without departing from such principles, and may be combined in any desired manner. And although the foregoing discussion has focused on particular embodiments, other configurations are contemplated. In particular, even though expressions such as "according to an embodiment of the invention" or the like are used herein, these phrases are meant to generally reference embodiment possibilities, and are not intended to limit the invention to particular embodiment configurations. As used herein, these terms may reference the same or different embodiments that are combinable into other embodiments.

Consequently, in view of the wide variety of permutations to the embodiments described herein, this detailed description and accompanying material is intended to be illustrative only, and should not be taken as limiting the scope of the invention. What is claimed as the invention, therefore, is all such modifications as may come within the scope and spirit of the following claims and equivalents thereto.

## Claims

1. A machine-controlled method of evaluating a video data stream, comprising:
receiving the video data stream from a video data source, the video data stream comprising a plurality of channels, each of which comprises a plurality of video frames;
selecting at least two of the plurality of video frames corresponding to a particular one of the plurality of channels;
extracting the selected video frames from the video data stream;
decoding each of the extracted video frames;
comparing at least one of the decoded video frames to at least one of the other decoded video frame(s) or at least one previously stored video frame; and
preparing an evaluation of the video data stream based at least in part on the comparing.

2. The machine-controlled method of evaluating a video data stream according to claim 1 in which the video data stream comprises one of a group consisting of Internet Protocol (IP) video, satellite-provided video, cable-provided video and terrestrial transmission video.

3. The machine-controlled method of evaluating a video data stream according to claim 1 in which the selecting comprises selecting at least two independent video frames (I-frames) corresponding to the particular one of the plurality of channels.

4. The machine-controlled method of evaluating a video data stream according to claim 1 in which the selecting comprises selecting at least one independent video frame (I-frame) and at least one bi-directional video frame (B-frame) or predictive video frame (P-frame) corresponding to the particular one of the plurality of channels.

5. The machine-controlled method of evaluating a video data stream according to claim 1 further comprising performing the selecting, extracting, decoding, comparing, and preparing for at least two of a plurality of video frames corresponding to a channel other than the particular one of the plurality of channels.

6. The machine-controlled method of evaluating a video data stream according to claim 5 further comprising selecting the channel other than the particular one of the plurality of channels based at least in part on a prioritized list of at least a sub-plurality of the plurality of channels.

7. The machine-controlled method of evaluating a video data stream according to claim 1 further comprising, subsequent to performing the selecting, extracting, decoding, comparing, and preparing for at least two of a plurality of video frames corresponding to each of the plurality of channels other than the particular one of the plurality of channels, repeating the selecting, extracting, decoding, comparing, and preparing for the particular one of the plurality of channels.

8. The machine-controlled method of evaluating a video data stream according to claim 1 in which the extracting comprises:
creating a synthetic data stream comprising information corresponding to each of the selected video frames;
formatting the synthetic data stream; and
adding to the synthetic data stream video frame-specific information corresponding to each of the selected video frames, the video frame-specific information comprising at least one of a group consisting of channel information, timing information, and metadata.

9. The machine-controlled method of evaluating a video data stream according to claim 1 in which the decoding comprises:
preparing a decoder to receive the extracted video frames;
passing the extracted video frames through the decoder; and
capturing output data from the decoder; and in which the method of evaluating the video data stream further comprises:
sending an error message to a control block responsive to an error during the decoding.

10. The machine-controlled method of evaluating a video data stream according to claim 1 in which, subsequent to an initial decoding, the preparing comprises resetting the decoder.

11. The machine-controlled method of evaluating a video data stream according to claim 1 in which the comparing comprises generating an alert responsive to a determination that the decoded video frames may exhibit a substantially black video presentation or a substantially frozen video presentation.

12. The machine-controlled method of evaluating a video data stream according to claim 11 further comprising, when the alert is generated, preparing a second evaluation of the video data stream by repeating the selecting, extracting, decoding, and comparing for a particular number of additional video frames in the video data stream.

13. The machine-controlled method of evaluating a video data stream according to claim 1 in which the comparing comprises generating an alert responsive to a determination that the decoded video frames may exhibit a blocky video presentation.

14. The machine-controlled method of evaluating a video data stream according to claim 13 further comprising, when the alert is generated, preparing a second evaluation of the video data stream by repeating the selecting, extracting, decoding, and comparing for a particular number of additional frames in the video data stream.

15. The machine-controlled method of evaluating a video data stream according to claim 1, further comprising storing the selected video frames.

16. One or more tangible, machine-readable media storing machine-executable instructions that, when executed by a machine, cause the machine to perform the machine-controlled method of evaluating a video data stream according to claim 1.

17. A video data stream evaluation system, comprising:
a video data receiver operable to receive an incoming video data stream;
a video data selection module operable to select at least two video frames within the incoming video data stream, the at least two video frames corresponding to a particular channel;
a video data extraction module operable to extract the selected video frames from the video data stream;
a video data decoder operable to decode the selected video frames extracted from the video data stream;
a video data comparison module operable to compare each of the decoded video frames to at least one reference video frame; and
a video data evaluation module operable to generate a report for the particular channel based at least in part on output information received from the video data comparison module.

18. The video data stream evaluation system of claim 17 in which the at least one reference video frame comprises the other one or more decoded video frames or one or more previously stored video frames, or one or more decoded video frames and one or more previously stored video frames.

19. The video data stream evaluation system of claim 17, further comprising a storage module operable to store the selected video frames and to provide the stored video frames for subsequent comparisons performed by the video data comparison module.

20. The video data stream evaluation system of claim 17 in which the video data evaluation module is further operable to transmit the report for the particular channel to a designated recipient.
